# EUROPEAN PATENT SPECIFICATION

(11) **EP 3 533 651 B1**
(45) Date of publication and mention of the grant of the patent: **07.04.2021**
(21) Application number: 17865025.5
(22) Date of filing: 21.09.2017
(51) Int. Cl.: B60K 20/02, G05G 5/03, G05G 9/047, G05G 25/00, H01H 25/04

(54) **MULTI-DIRECTIONAL INPUT DEVICE**
MULTIDIREKTIONALE EINGABEVORRICHTUNG
DISPOSITIF D'ENTRÉE MULTIDIRECTIONNEL

(30) Priority: 27.10.2016 JP 2016210575
(43) Date of publication of application: 04.09.2019
(73) Proprietor: Alps Alpine Co., Ltd., Tokyo 1458501 (JP)
(72) Inventor: ISHIKAWA, Shinji, Tokyo 145-8501 (JP); MAEDA, Takuya, Tokyo 145-8501 (JP)
(74) Representative: Schmitt-Nilson Schraud Waibel Wohlfrom Patentanwälte Partnerschaft mbB
(86) International application number: PCT/JP2017/034159
(87) International publication number: WO 2018/079148

(56) References cited:
- JP-A- H08 117 442
- JP-A- 2002 254 952
- JP-A- 2002 254 952
- JP-A- 2005 119 440
- JP-A- 2011 207 452
- US-A- 4 733 214
- US-A- 4 912 997

## Description

### Technical Field

The present invention relates to a multi-directional input device, and more particularly to a multi-directional input device that switches the transmission of a vehicle.

### Background Art

A multi-directional input device is known that switches the transmission of a vehicle by switching the shift position of a manipulation lever. In the multi-directional input device, a mechanism that generates a manipulation feeling is provided to have the manipulator get a feel for the change of the shift position. The multi-directional input device described in PTL 1 has a sliding spherical surface that is shaped like a spherical body and rotates at a fixed position, a manipulation lever fixed to the sliding spherical surface, a pin that moves together with the manipulation lever at a position distant from the sliding spherical surface, and a cam surface positioned on the travel path of the pin. With the multi-directional input device in PTL 1, when the manipulation lever is moved with the sliding spherical surface at the center, the pin moves along the cam surface, so the manipulator can get a manipulation feeling.

### Citation List

### Patent Literature

PTL 1: Japanese Unexamined Patent Application Publication No. 2015-7938
US 4 733 214 A shows a multi-directional contactless controller sensing a displacement of a manipulator with respect to a reference frame along two orthogonal directions. The controller is provided with a resiliently biased cam and cam follower disposed between the manipulator and the reference frame for providing tactile feedback and returning the manipulator to a central position. JP 2002 254952 A shows a select device of a shift device provided with an approximately dome-shaped hemispherical knob firmed in a raised state from a hole of a case. The hemispherical knob 2 is a stationary-type knob longitudinally and laterally operated and held on a selected position even unhanding the knob in operation, and is provided with holes for fitting fingers therein. A spherical part of a shaft is longitudinally and laterally slidably rotatably accommodated in an accommodation recessed part of a holder supported in the case.

### Summary of Invention

### Technical Problem

However, the multi-directional input device in PTL 1 has the disadvantage that since the pin is provided at a position distant from the sliding spherical surface, the entire dimension becomes large. The multi-directional input device also has the disadvantage that since the pin is far away from the center of the rotation, the dimension of the cam surface is large and the entire dimension becomes further large.

The present invention addresses the above situation with the object of providing a multi-directional input device that can give a manipulation feeling to the manipulator while achieving a smaller size than before.

### Solution to Problem

The present invention is a multi-directional input device according to claim 1.

According to this structure, since the actuator is at least partially stored in the storage part of the rotating body, the distance from the rotating body to the cam part can be shortened when compared with a case in which the actuator is at a position distant from the rotating body, so a manipulation feeling can be given to the manipulator while achieving a smaller size than before.

Preferably, in the multi-directional input device in the present invention, the elastic member is at least partially stored in the storage part.

According to this structure, since the actuator and elastic member are at least partially stored in the storage part of the rotating body, the distance from the rotating body to the cam part can be shortened when compared with a case in which at least one of the actuator and elastic member is at a position distant from the rotating body, so a manipulation feeling can be given to the manipulator while achieving a smaller size than before.

Preferably, in the multi-directional input device in the present invention, the cam part and support body are formed integrally with each other.

According to this structure, since the cam part and support body are formed integrally with each other, a smaller size can be achieved and the number of parts can be reduced when compared with a case in which separate members are combined.

Preferably, in the multi-directional input device in the present invention, the storage part includes an inner wall that slidably supports the actuator and the actuator travels along the inner wall.

According to this structure, since the storage part includes an inner wall that slidably supports the actuator and the actuator travels along the inner wall, a smaller size can be achieved when compared with a case in which a part used to guide the actuator is provided separately.

According to this structure, since at least part of the support axis extending from the inside of the storage part to the outside of the rotating body is slidably positioned in the through-hole in the actuator and the actuator travels along the support axis, the rattle of the actuator can be prevented and a manipulation feeling can be enhanced.

Preferably, in the multi-directional input device in the present invention, a position detecting unit is further provided that detects a shift position according to the position of the support axis.

According to this structure, since a position detecting unit is further provided that detects a shift position according to the position of the support axis, a smaller size can be achieved when compared with a case in which a separate part used to detect a shift position is provided.

### Advantageous Effects of Invention

According to the present invention, a manipulation feeling can be given to the manipulator while achieving a smaller size than before.

### Brief Description of Drawings

[Fig. 1] Fig. 1 is a perspective view of a multi-directional input device according an embodiment of the present invention.
[Fig. 2] Fig. 2 is a perspective view of the multi-directional input device indicated in Fig. 1 with the case omitted.
[Fig. 3] Fig. 3 is a perspective view of the multi-directional input device indicated in Fig. 1 with the case and manipulation cover omitted.
[Fig. 4] Fig. 4 is a rear view of the multi-directional input device indicated in Fig. 1 with the case and manipulation cover omitted.
[Fig. 5] Fig. 5 is a side view of the multi-directional input device indicated in Fig. 1 with the case and manipulation cover omitted.
[Fig. 6] Fig. 6 is an exploded perspective view of the multi-directional input device indicated in Fig. 1 with the case and manipulation cover omitted when viewed from the z1 side.
[Fig. 7] Fig. 7 is an exploded perspective view of the multi-directional input device indicated in Fig. 1 with the case and manipulation cover omitted when viewed from the z2 side.
[Fig. 8] Fig. 8 is a cross-sectional view of the multi-directional input device at a cross section passing through the line 8-8 in Fig. 4.
[Fig. 9] Fig. 9 is a perspective view of a second support body indicated in Fig. 6 when viewed from the x1 side.
[Fig. 10] Fig. 10 is a perspective view of the second support body indicated in Fig. 6 when viewed from the x2 side.
[Fig. 11] Fig. 11 is a cross-sectional view of the multi-directional input device at a cross section passing through the line 11-11 in Fig. 5.
[Fig. 12] Fig. 12 is a perspective view of a rotational body and a manipulation axis, which are indicated in Fig. 6, when viewed from the z1 side.
[Fig. 13] Fig. 13 is a perspective view of the rotational body, the manipulation axis, and a support axis, which are indicated in Fig. 6, when viewed from the z2 side.
[Fig. 14] Fig. 14 is a cross-sectional view of the multi-directional input device at the same cross section as in Fig. 8 in an unlocked state.
[Fig. 15] Fig. 15 is a cross-sectional view of the multi-directional input device at the same cross section as in Fig. 11 in a state after rotation in a second rotational direction.

### Description of Embodiments

### (Entire structure)

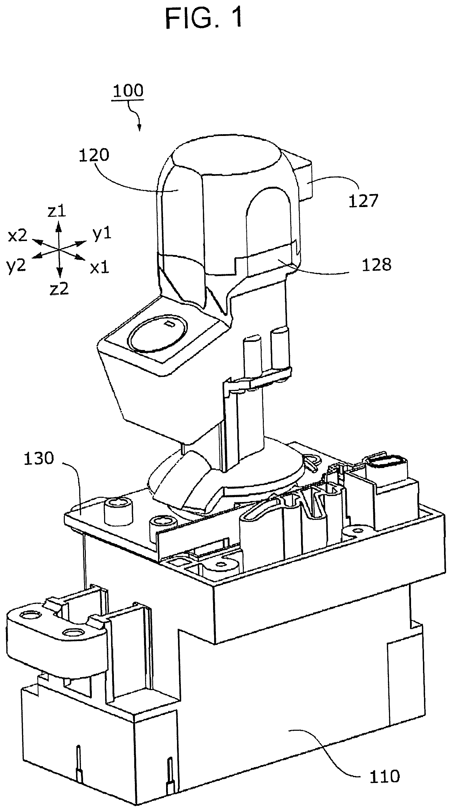

A multi-directional input device according to an embodiment of the present invention will be described below. Fig. 1 is a perspective view of the multi-directional input device 100 according to this embodiment. The multi-directional input device 100 includes a case 110 that is fixed to a vehicle and accommodates part of the constituent elements of the multi-directional input device 100, and also includes a manipulation lever 120 that can travel relative to the case 110. Most of the manipulation lever 120 is positioned outside the case 110. The manipulation lever 120 includes a manipulation cover 128 that the driver of the vehicle can hold.

The manipulation lever 120 can be inclined at a plurality of shift position with respect to the case 110 by being manually manipulated by the driver of the vehicle. The multi-directional input device 100 switches the transmission of the vehicle by sending an electronic signal corresponding to the shift position of the manipulation lever 120 to a control device in the vehicle.

In this specification, an x direction, a y direction, and a z direction, which are mutually orthogonal, are defined. The x direction is represented without distinguishing between an x1 direction and an x2 direction, which are mutually opposite. The y direction is represented without distinguishing between a y1 direction and y2 direction, which are mutually opposite. The z direction is represented without distinguishing between a z1 direction and z2 direction, which are mutually opposite. Also, the z1 direction will sometimes be referred to as the upper direction and the z2 direction will sometimes be referred to as the lower direction. These directions are defined for the sake of convenience to explain relative positional relationships, and do not restrict directions during actual usage. The shapes of the constituent elements are not limited to strict geometrical shapes based on described representations regardless of whether "substantially" is described as long as the technical concept of the embodiment disclosed in this specification is implemented.

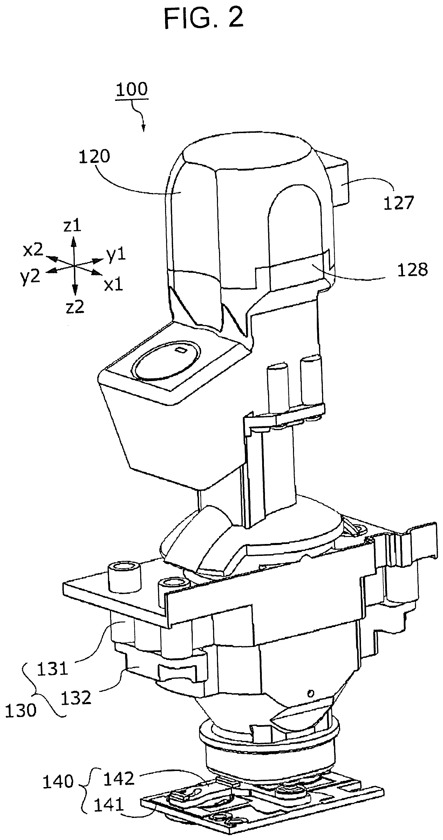

Fig. 2 is a perspective view of the multi-directional input device 100 with the case 110 (Fig. 1) omitted. As indicated in Fig. 2, the multi-directional input device 100 further includes a support body 130 and a position detecting unit 140. Most of the support body 130 is positioned in the case 110 (Fig. 1) and is fixed to the case 110 (Fig. 1). The whole of the position detecting unit 140 is positioned in the case 110 (Fig. 1). The position detecting unit 140 is partially fixed to the case 110 (Fig. 1) outside the support body 130. The position detecting unit 140 detects the shift position of the manipulation lever 120.

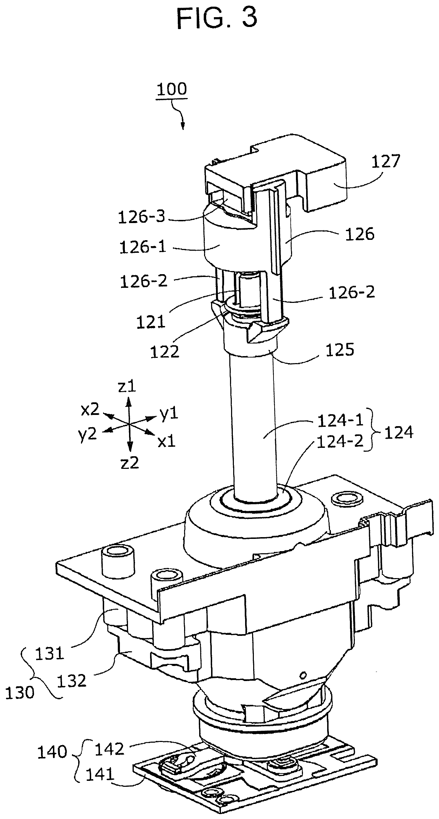

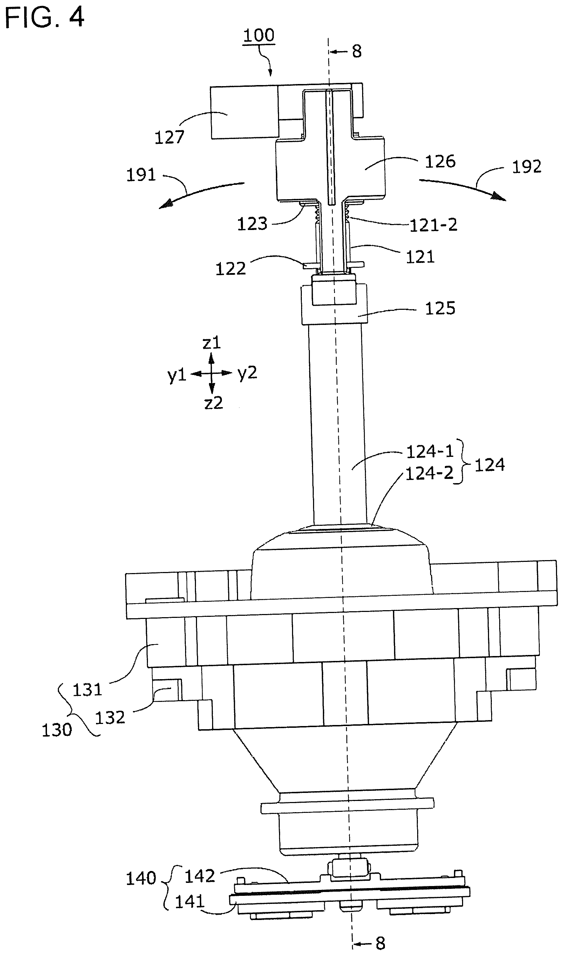

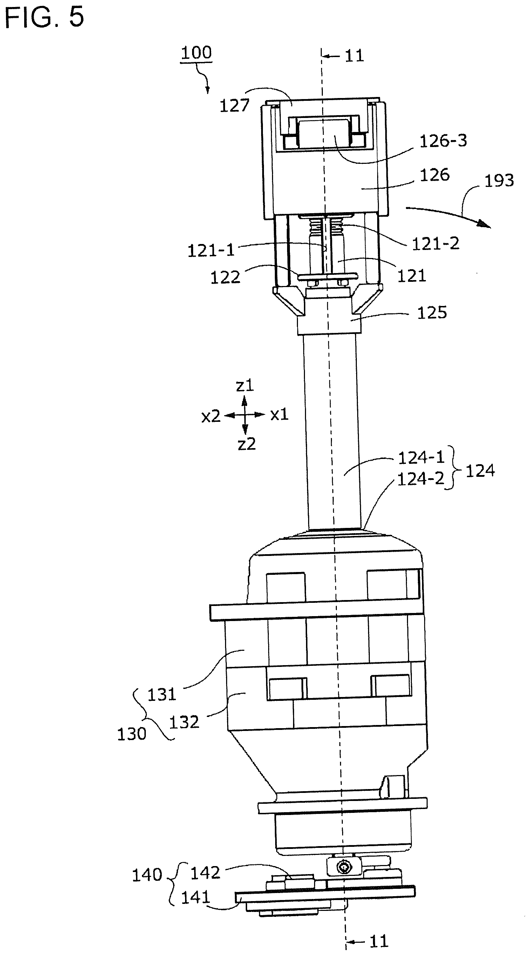

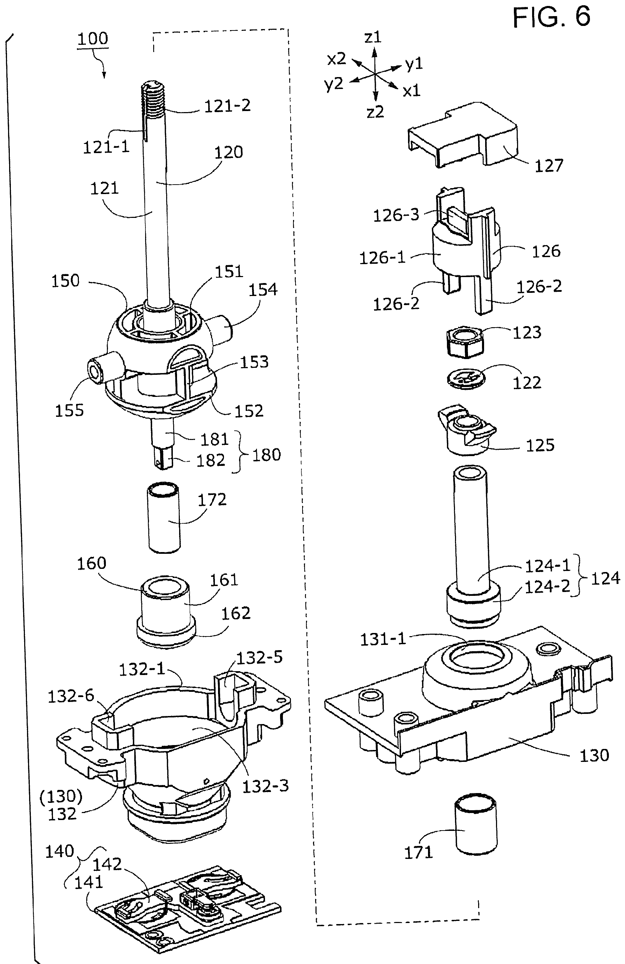

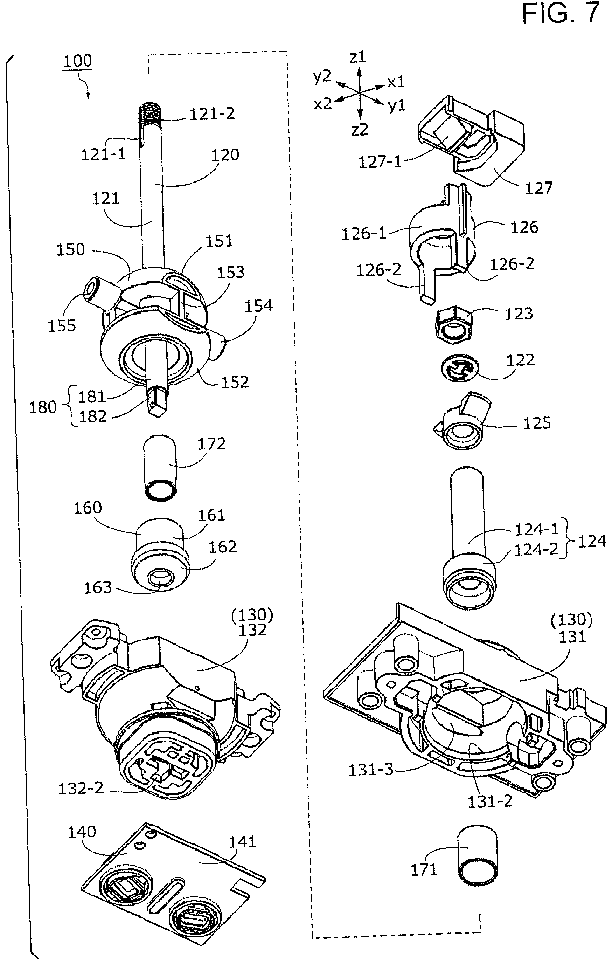

Fig. 3 is a perspective view of the multi-directional input device 100 with the case 110 and manipulation cover 128 indicated in Fig. 1 omitted. Fig. 4 is a rear view of the multi-directional input device 100 with the case 110 and manipulation cover 128 indicated in Fig. 1 omitted. Fig. 5 is a side view of the multi-directional input device 100 with the case 110 and manipulation cover 128 indicated in Fig. 1 omitted. Fig. 6 and Fig. 7 are an exploded perspective view of the multi-directional input device 100 with the case 110 and manipulation cover 128 indicated in Fig. 1 omitted. Fig. 6 is a drawing when viewed from the z1 side. Fig. 7 is a drawing when viewed from the z2 side.

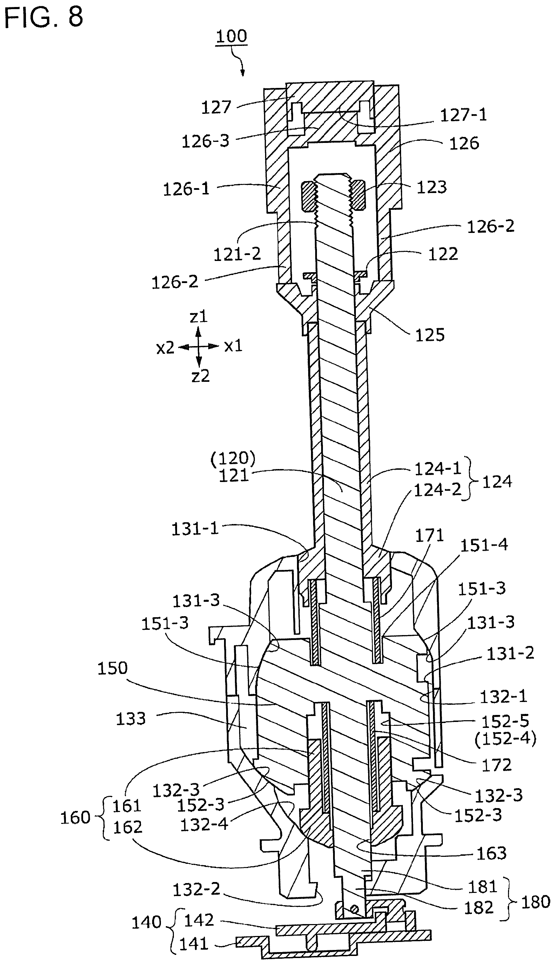

Fig. 8 is a cross-sectional view when a cross section parallel to a zx plane passing through the line 8-8 in Fig. 4 is viewed from the y2 side in the y1 direction. As indicated in Fig. 8, an internal space 133 is provided in the support body 130. The multi-directional input device 100 further includes a rotating body 150, an actuator 160, a first elastic member 171, a second elastic member 172, and a support axis 180, which are as indicated in Fig. 6, in the internal space 133. Each constituent element will be described below in detail.

### (Support body)

As indicated in Fig. 4, the support body 130 includes a first support body 131 on the z1 side and a second support body 132 on the z2 side. The first support body 131 and second support body 132 are mutually fixed with screws that are not indicated in the drawing.

As indicated in Fig. 6, in the first support body 131, a first upper opening 131-1 is provided on the z1 side. As indicated in Fig. 8, the first upper opening 131-1 is provided at an end of the internal space 133 on the z1 side, making the internal space 133 open in the z1 direction. The first upper opening 131-1 is a discoid space that is short in the z direction and expands in directions substantially orthogonal to the z direction.

As indicated in Fig. 7, in the first support body 131, a first lower opening 131-2 is provided on the z2 side. As indicated in Fig. 8, the first lower opening 131-2 is provided at an intermediate point in the internal space 133 in the z direction, and faces the second support body 132. The first lower opening 131-2 has a size that enables part of the rotating body 150 to be accommodated in the internal space 133 in the first support body 131 from the z2 side.

As indicated in Fig. 8, the first support body 131 has a first sliding support surface 131-3 between the first upper opening 131-1 and the first lower opening 131-2 in the z direction, the first sliding support surface 131-3 facing the internal space 133. The first sliding support surface 131-3 is part of a ring-shaped surface obtained by cutting a half of one virtual spherical surface on the z1 side with two planes parallel to an xy plane. In a direction orthogonal to the z direction, the size of an edge of the first sliding support surface 131-3 on the z2 side is substantially the same as the size of the first lower opening 131-2. In direction orthogonal to the z direction, a space between the first upper opening 131-1 and the first sliding support surface 131-3 in the internal space 133 is wider than the first upper opening 131-1 and is narrower than an end of the first sliding support surface 131-3 on the z1 side.

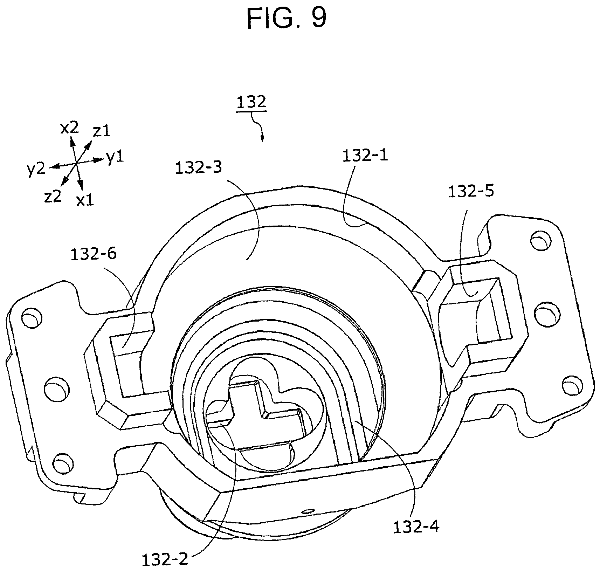

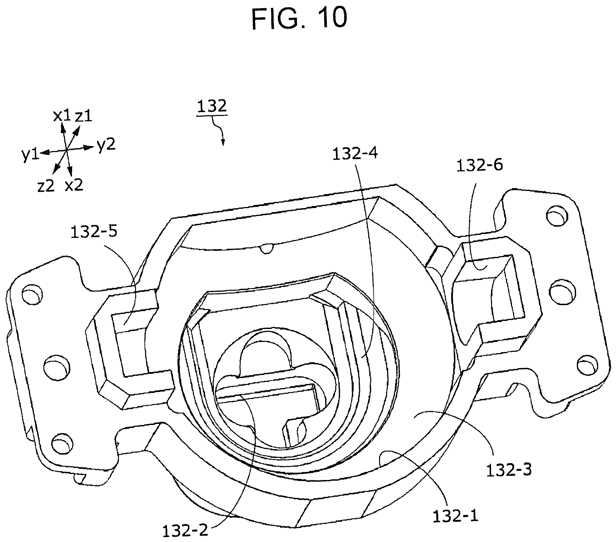

Fig. 9 is a perspective view of the second support body 132 when viewed from the x1 side. Fig. 10 is a perspective view of the second support body 132 when viewed from the x2 side.

As indicated in Fig. 9, in the second support body 132, a second upper opening 132-1 is provided on the z1 side. As indicated in Fig. 8, the second upper opening 132-1 is provided at an intermediate point in the internal space 133 in the z direction, and faces the first support body 131. The second upper opening 132-1 has a size that enables part of the rotating body 150 to be accommodated in the internal space 133 in the second support body 132 from the z1 side. The first lower opening 131-2 and second upper opening 132-1 have substantially the same size and are in tight contact with each other in the z direction.

As indicated in Fig. 7, in the second support body 132, a second lower opening 132-2 is provided on the z2 side. The second lower opening 132-2 is in a substantially T shape extending in three directions, y1 direction, y2 direction and x2 direction, when viewed from the z direction. As indicated in Fig. 8, the second lower opening 132-2 is provided at an end of the internal space 133 on the z2 side, making the internal space 133 open in the z2 direction.

As indicated in Fig. 8, the second support body 132 has a second sliding support surface 132-3 between the second upper opening 132-1 and the second lower opening 132-2 in the z direction, the second sliding support surface 132-3 facing the internal space 133. The second sliding support surface 132-3 is part of a ring-shaped surface obtained by cutting a half of one virtual spherical surface on the z2 side with two planes parallel to an xy plane. In a direction orthogonal to the z direction, the size of an edge of the second sliding support surface 132-3 on the z1 side is substantially the same as the size of the second upper opening 132-1.

The diameter of the virtual spherical surface that defines the second sliding support surface 132-3 is larger than the diameter of the virtual spherical surface that defines the first sliding support surface 131-3. The center position of the virtual spherical surface that defines the second sliding support surface 132-3 is substantially the same as the center position of the virtual spherical surface that defines the first sliding support surface 131-3.

As indicated in Fig. 8, the second support body 132 has a cam part 132-4 between the second sliding support surface 132-3 and the second lower opening 132-2 in the z direction, the cam part 132-4 facing the internal space 133. The cam part 132-4 has a concave portion and a convex portion that are oriented toward the internal space 133. The extent of the cam part 132-4 in directions orthogonal to the z direction varies depending on the position in the z direction. The cam part 132-4 and support body 130 are formed integrally with each other. As indicated in Fig. 9, the concave portion and convex portion of the cam part 132-4 are formed on the y1-side inner surface, y2-side inner surface, and x2-side inner surface of the second support body 132. As indicated in Fig. 10, the concave portion and convex portion of the cam part 132-4 are not provided on the x1-side inner surface of the second support body 132.

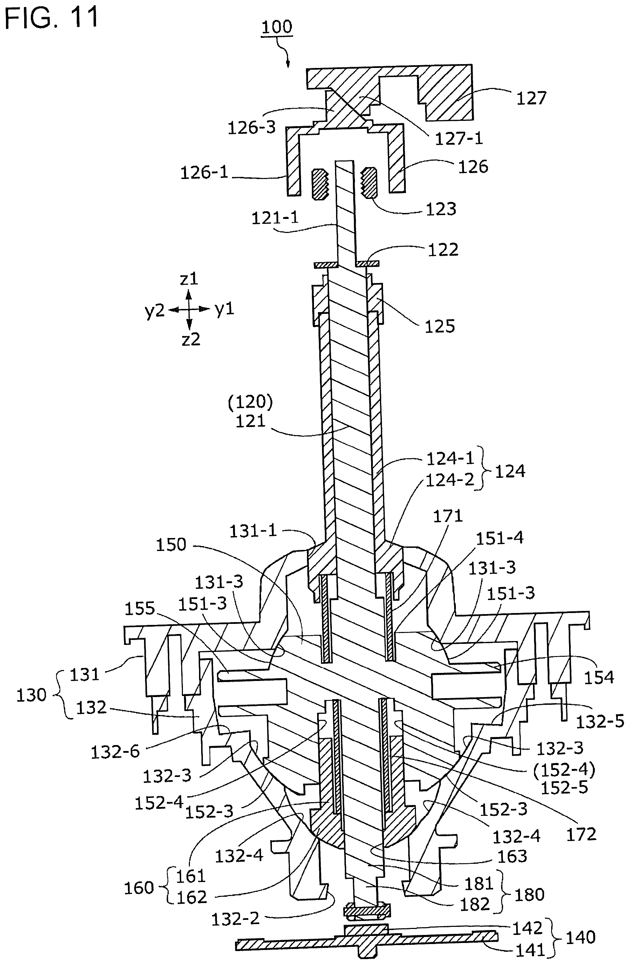

Fig. 11 is a cross-sectional view when a cross section parallel to a yz plane passing through the line 11-11 in Fig. 5 is viewed from the x1 side in the x2 direction. As indicated in Fig. 9, the second support body 132 includes, in the vicinity of the second upper opening 132-1, a first groove 132-5 recessed from the y1-side edge of the second upper opening 132-1 in the y1 direction and a second groove 132-6 recessed from the y2-side edge of the second upper opening 132-1 in the y2 direction. As indicated in Fig. 11, although the first groove 132-5 and second groove 132-6 are open in the z1 direction when the second support body 132 is alone, they are covered by the first support body 131 in a state in which the second support body 132 is combined with the first support body 131.

### (Rotational body)

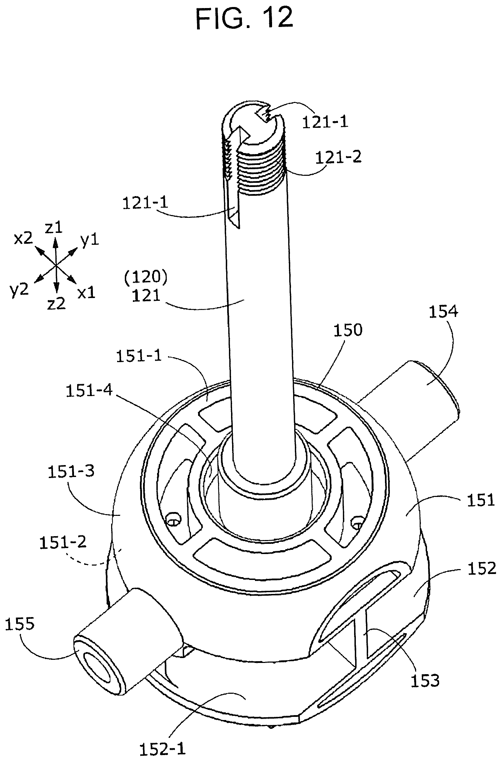

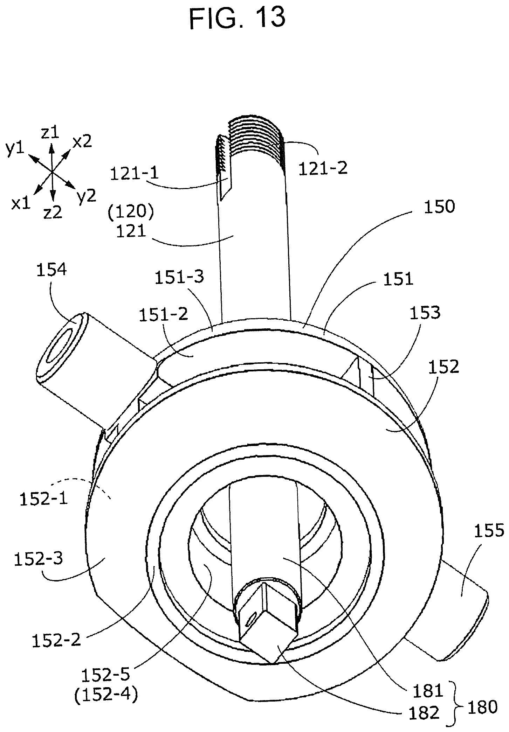

Fig. 12 is a perspective view of the rotating body 150 and a manipulation axis 121, which will be described later, when viewed from the z1 side. Fig. 13 is a perspective view of the rotating body 150, the manipulation axis 121, which will be described later, and a support axis 180, which will be described later, when viewed from the z2 side. As indicated in Fig. 12, the rotating body 150 includes a first spherical part 151, a second spherical part 152, a connecting part 153, a first protrusion 154, and a second protrusion 155.

As indicated in Fig. 12, the first spherical part 151 includes a first upper surface 151-1, on the z1 side, which is substantially parallel to an xy plane, a first lower surface 151-2, on the z2 side, which is substantially parallel to an xy plane, and a first sliding surface 151-3. The first sliding surface 151-3 is part of a surface obtained by cutting a half of one virtual spherical surface on the z1 side with the first upper surface 151-1 and first lower surface 151-2. The first spherical part 151 includes an axial hole 151-4 that is in a substantially cylindrical shape and is recessed from the center of the first upper surface 151-1 in a substantially circular shape in the z2 direction.

As indicated in Fig. 13, the second spherical part 152 includes a second upper surface 152-1 that is on the z1 side and is substantially parallel to an xy plane, a second lower surface 152-2 that is on the z2 side and is substantially parallel to an xy plane, and a second sliding surface 152-3. The second sliding surface 152-3 is part of a surface obtained by cutting a half of one virtual spherical surface on the z2 side with the second upper surface 152-1 and second lower surface 152-2. The second spherical part 152 includes a storage part 152-4 that is in a substantially cylindrical shape and is recessed from the center of the second lower surface 152-2 in a substantially circular shape in the z1 direction. The storage part 152-4 is recessed from the outside of a virtual spherical surface that defines the second sliding surface 152-3 toward the inside. The storage part 152-4 has an inner wall 152-5 that is in a cylindrical shape and has a central axis parallel to the z direction.

As indicated in Fig. 11, the first sliding surface 151-3 and second sliding surface 152-3 each form at least part of a different virtual spherical surface. The diameter of the virtual spherical surface that defines the first sliding surface 151-3 is substantially the same as the diameter of the virtual spherical surface that defines the first sliding support surface 131-3, but is slightly smaller. The diameter of the virtual spherical surface that defines the second sliding surface 152-3 is substantially the same as the diameter of the virtual spherical surface that defines the second sliding support surface 132-3, but is slightly smaller. The center position of the virtual spherical surface that defines the first sliding surface 151-3, the center position of the virtual spherical surface that defines the first sliding support surface 131-3, the center position of the virtual spherical surface that defines the second sliding surface 152-3, and the center position of the virtual spherical surface that defines the second sliding support surface 132-3 are substantially the same. The first sliding surface 151-3 slides along the first sliding support surface 131-3. The second sliding surface 152-3 slides along the second sliding support surface 132-3. That is, the support body 130 supports the rotating body 150 so as to be rotatable around one center by slidably supporting the first sliding surface 151-3 and second sliding surface 152-3.

There are a match between the central axis of a cylinder that defines the axial hole 151-4 and the central axis of a cylinder that defines the storage part 152-4. These central axes are substantially parallel to the z direction and pass through the center of the rotation of the rotating body 150.

As indicated in Fig. 12, the connecting part 153 connects between the first spherical part 151 and the second spherical part 152 in the z direction. The second spherical part 152 is positioned on the z2 side of the first spherical part 151. The first protrusion 154 protrudes from the y1 side of the first spherical part 151 in the y1 direction, has a central axis parallel to the y direction, and is in a substantially cylindrical shape. The second protrusion 155 protrudes from the y2 side of the first spherical part 151 in the y2 direction, has a central axis parallel to the y direction, and is in a substantially cylindrical shape.

As indicated in Fig. 11, the first protrusion 154 is positioned in the first groove 132-5. The second protrusion 155 is positioned in the second groove 132-6. When the rotating body 150 rotates around a rotational axis parallel to the x direction, the travel of the first protrusion 154 is restricted to between the first groove 132-5 and the first support body 131 and the travel of the second protrusion 155 is restricted to between the second groove 132-6 and the second support body 132, so the amount of rotation of the rotating body 150 is restricted. The first protrusion 154 can hardly travel in the x direction in the first groove 132-5 and the second protrusion 155 can hardly travel in the x direction in the second groove 132-6. When the rotating body 150 rotates around a rotational axis parallel to the y direction, the rotating body 150 rotates around the first protrusion 154 and second protrusion 155.

### (Support axis)

As indicated in Fig. 8, the support axis 180 extends from an end in the storage part 152-4 in the rotating body 150 on the z1 side toward the z2 direction to the outside of the rotating body 150. As indicated in Fig. 13, the support axis 180 includes a columnar part 181, on the z1 side, that has a central axis along the z direction, and also includes a quadratic prism 182, on the z2 side, that has a central axis along the z direction.

As indicated in Fig. 8, the central axes of the columnar part 181 and quadratic prism 182 pass through the center of the rotation of the rotating body 150. The columnar part 181 extends from the interior of the storage part 152-4 to the vicinity of the second lower opening 132-2 of the second support body 132 in the internal space 133. The diameter of the columnar part 181 is smaller than the diameter of the inner wall 152-5 in the storage part 152-4. The quadratic prism 182 extends from an end of the columnar part 181 on the z2 side through the second lower opening 132-2 to the outside of the second support body 132.

### (Actuator and second elastic member)

As indicated in Fig. 6, the actuator 160 includes a cylindrical part 161 that is in a substantially cylindrical shape and has a central axis in the z direction, and also includes an abutting part 162 that is in a ring shape and protrudes from an end of the cylindrical part 161 on the z2 side in a direction orthogonal to the z direction. The actuator 160 has a through-hole 163 that passes through the cylindrical part 161 and abutting part 162 in the z direction. As indicated in Fig. 8, the through-hole 163 is in a substantially cylindrical shape and has an axis in the z direction; the diameter of the through-hole 163 changes at three levels depending on the position in the z direction. The diameter in the vicinity of an end on the z1 side is larger than the diameter in the vicinity of an end on the z2 side.

As indicated in Fig. 8, the diameter of the outer surface of the cylindrical part 161 is substantially the same as the diameter of the inner wall 152-5 of the storage part 152-4, but is slightly smaller. Part of the cylindrical part 161 on the z1 side is positioned in the storage part 152-4. The storage part 152-4 slidably supports the actuator 160, which is partially stored in the storage part 152-4. In the state indicated in Fig. 8, the actuator 160 travels along the inner wall 152-5 substantially only in the z direction.

At least part of the support axis 180 is slidably positioned in the through-hole 163. Specifically, the columnar part 181 of the support axis 180 is positioned in the through-hole 163. The diameter of the through-hole 163 in the vicinity of the end on the z2 side is substantially the same as the diameter of the columnar part 181, but is slightly larger. Therefore, the actuator 160 slides with respect to the columnar part 181 in an area in the vicinity of the abutting part 162, the area being part of the through-hole 163, and travels along the columnar part 181 substantially only in the z direction.

The second elastic member 172 is at least partially stored in the storage part 152-4. The second elastic member 172 is a coil spring embedded around the columnar part 181. An end of the second elastic member 172 on the z1 side is supported by an end of the storage part 152-4 on the z1 side. An end of the second elastic member 172 on the z2 side is positioned in a clearance between the cylindrical part 161 and the columnar part 181. The clearance between the cylindrical part 161 and the columnar part 181 extends to an intermediate point on the abutting part 162. The second elastic member 172 urges the actuator 160 in the z2 direction between the rotating body 150 and the actuator 160.

In the z direction, the abutting part 162 is positioned between the storage part 152-4 of the rotating body 150 and the second lower opening 132-2 of the second support body 132. Part of the abutting part 162 abuts the cam part 132-4. The abutting part 162 is urged along the support axis 180 by the second elastic member 172. As a result, since the abutting part 162 is urged toward the cam part 132-4, when the rotating body 150 rotates, the abutting part 162 travels along the concave portion and convex portion of the cam part 132-4.

### (Manipulation lever and first elastic member)

The manipulation lever 120 indicated in Fig. 8 rotates together with the rotating body 150 and can be manipulated to shift to a plurality of shift positions. As indicated in Fig. 6, the manipulation lever 120 includes the manipulation axis 121, a stopper 122, a nut 123, a lock lower part 124, a lock relay part 125, a lock upper part 126, a button 127, and the manipulation cover 128.

As indicated in Fig. 8, the manipulation axis 121 extends in the z1 direction from an end of the axial hole 151-4 in the rotating body 150 on the z2 side to the outside of the support body 130. The manipulation axis 121 is in a substantially cylindrical shape and has a central axis substantially parallel to the z direction. The central axis of the manipulation axis 121 passes through the center of the rotation of the rotating body 150.

As indicated in Fig. 12, the manipulation axis 121 has two locking grooves 121-1 in the vicinity of an end on the z1 side. Each of the two locking grooves 121-1 extends from an end of the manipulation axis 121 on the z1 side toward the z2 direction along the outer circumferential curved surface of the manipulation axis 121. The stopper 122 indicated in Fig. 7 is a ring-shaped member; two protrusions are provided on it toward the inside. As indicated in Fig. 11, each of the two protrusions of the stopper 122 is fitted to a different locking groove 121-1. The stopper 122 does not move in the z2 direction beyond the two locking grooves 121-1.

As indicated in Fig. 12, the manipulation axis 121 has screw threads 121-2 in the vicinity of the z1-side end. The length of an area, in the z direction, in which the screw threads 121-2 are provided is shorter than the two locking grooves 121-1. As indicated in Fig. 8, the nut 123 is engaged around the screw threads 121-2. Although not indicated in the drawing, the manipulation cover 128 indicated in Fig. 2 is fixed between the stopper 122 and the nut 123. That is, the manipulation cover 128 moves together with the manipulation axis 121.

The lock lower part 124 is placed between the stopper 122 and the rotating body 150. The lock lower part 124 includes a lock cylindrical part 124-1 and a lock main body 124-2. Each of the lock cylindrical part 124-1 and lock main body 124-2 is in a substantially cylindrical shape and has a central axis substantially parallel to the z direction. The lock main body 124-2 extends in the z2 side from an end of the lock cylindrical part 124-1 on the z2 side. The diameter of the lock main body 124-2 is larger than the diameter of the lock cylindrical part 124-1. The diameter of the outer circumferential curved surface of the lock main body 124-2 is substantially the same as the diameter of the first upper opening 131-1 in the support body 130. The lock main body 124-2 is positioned in the first upper opening 131-1.

The first elastic member 171 is at least partially stored in the axial hole 151-4. The first elastic member 171 is a coil spring embedded around the manipulation axis 121. An end of the first elastic member 171 on the z2 side is fixed to an end of the axial hole 151-4 on the z2 side. An end of the first elastic member 171 on the z1 side is fixed to an end of the lock main body 124-2 on the z2 side. The first elastic member 171 urges the lock lower part 124 in the z1 direction between the rotating body 150 and the lock lower part 124.

The lock relay part 125 is a ring-shaped member that encloses the manipulation axis 121 between the stopper 122 and the lock lower part 124. When the lock relay part 125 travels in the z2 direction, the lock lower part 124 is pressed in the z2 direction. When the lock lower part 124 travels in the z1 direction, the lock relay part 125 is pressed in the z1 direction. The lock relay part 125 does not travel in the z1 direction beyond the stopper 122.

The lock upper part 126 includes a ring-shaped part 126-1 that encloses the manipulation axis 121, two legs 126-2 extending from the ring-shaped part 126-1 in the z2 direction, and a first triangular protrusion 126-3 distant from an end of the manipulation axis 121 on the z1 side in the z1 direction. The first triangular protrusion 126-3 is fixed to the ring-shaped part 126-1. The lock upper part 126 is distant from the manipulation axis 121, stopper 122, and nut 123. When the lock upper part 126 travels in the z2 direction, the lock relay part 125 is pressed in the z2 direction through the legs 126-2. When the lock relay part 125 travels in the z1 direction, the lock upper part 126 is pressed in the z1 direction through the legs 126-2.

The button 127 indicated in Fig. 7 is supported by the manipulation cover 128 (Fig. 1) so as to be travelable in the y direction. The button 127 has, in the manipulation cover 128 (Fig. 1), a second triangular protrusion 127-1 protruding in the z2 direction. As indicated in Fig. 11, the inclined surface of the first triangular protrusion 126-3 of the lock upper part 126 and the inclined surface of the second triangular protrusion 127-1 are oppositely placed. When the button 127 travels in the y2 direction, the lock upper part 126 is pressed in the z2 direction. When the lock upper part 126 travels in the z1 direction, the button 127 is pressed in the y1 direction.

The manipulation cover 128 indicated in Fig. 2 internally stores part of the manipulation axis 121, the stopper 122, the nut 123, the lock lower part 124, the lock relay part 125, the lock upper part 126, and part of the button 127, these components being indicated in Fig. 8. The manipulation cover 128 (Fig. 2) is fixed to the manipulation axis 121 by the stopper 122 and nut 123, which are indicated in Fig. 8. The lock lower part 124, lock relay part 125, lock upper part 126, and button 127, which are indicated in Fig. 8, can travel relative to the manipulation cover 128 (Fig. 2).

### (Position detecting unit)

The position detecting unit 140 indicated in Fig. 8 detects the shift position of the manipulation lever 120 according to the position of the support axis 180. The position detecting unit 140 includes a fixed part 141 fixed to the case 110 (Fig. 1), and also includes a slid mechanism 142 that can travel relative to the fixed part 141. The slid mechanism 142 is composed of a plurality of members that move along with the travel of the quadratic prism 182 of the support axis 180. The position detecting unit 140 detects the shift position of the manipulation lever 120 according to the motion of the slid mechanism 142 relative to the fixed part 141. In another example, the position detecting unit 140 may mechanically detect the shift position by using another mechanism or may detect the shift position optically, magnetically, electrically, or on another principle.

### (Operation)

Next, the operation of the multi-directional input device 100 will be described. In the initial state indicated in Fig. 8, the lock main body 124-2 is inside the first upper opening 131-1 due to the elastic force of the first elastic member 171, so the rotating body 150 cannot be rotated by the manipulation lever 120.

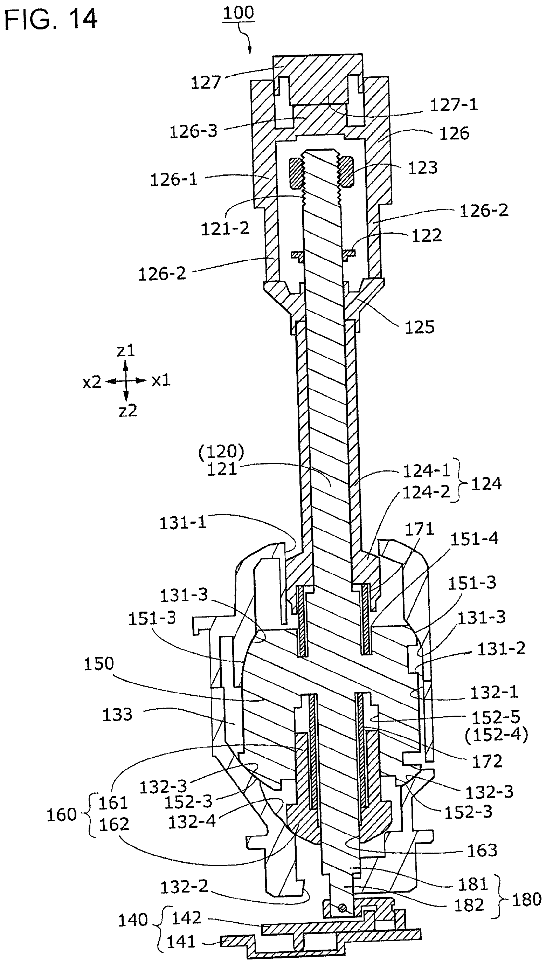

Fig. 14 is a cross-sectional view of the multi-directional input device 100 at the same cross section as in Fig. 8 in an unlocked state. When the button 127 is pressed in the y2 direction in the initial state indicated in Fig. 11, the lock upper part 126 travels downward as indicated in Fig. 14. When the lock relay part 125 and lock lower part 124 are pressed in the z2 direction by the lock upper part 126, the first elastic member 171 is compressed and the lock main body 124-2 is pressed into the internal space 133 in the support body 130.

In the unlocked state indicated in Fig. 14, the manipulation lever 120 can be rotated in a first rotational direction 191 (that is, a direction in which the manipulation lever 120 is tilted in the y1 direction) indicated in Fig. 4, in a second rotational direction 192 (that is, a direction in which the manipulation lever 120 is tilted in the y2 direction) indicated in Fig. 4, and in a third rotational direction 193 (that is, a direction in which the manipulation lever 120 is tilted in the x1 direction) indicated in Fig. 5. An operation when the manipulation lever 120 is rotated in the second rotational direction 192 will be described below. Operations of the multi-directional input device 100 in all rotational directions are similar.

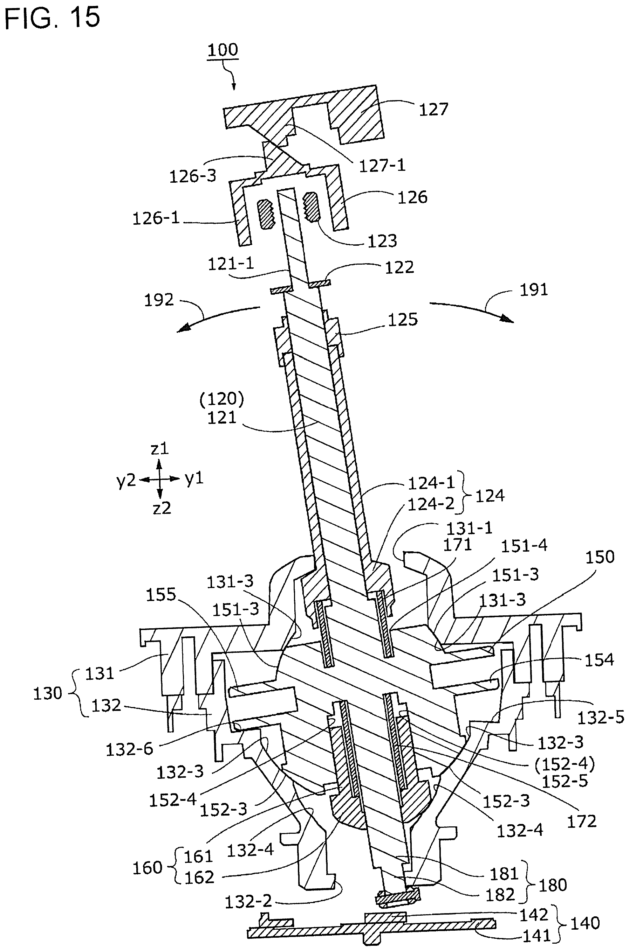

Fig. 15 is a cross-sectional view of the multi-directional input device 100 at the same cross section as in Fig. 11 in a state after rotation in the second rotational direction 192. The rotating body 150 rotates while maintaining the center position. The first sliding surface 151-3 slides along the first sliding support surface 131-3, and the second sliding surface 152-3 slides along the second sliding support surface 132-3. The abutting part 162 of the actuator 160 moves along the cam part 132-4. At this time, a manipulation feeling is transmitted to the manipulation lever 120 through the abutting part 162 and the concave portion and convex portion of the cam part 132-4. Specifically, when the abutting part 162 passes over the step of the cam part 132-4, a click feeling is transmitted to the manipulation lever 120. Furthermore, the motion of the support axis 180 is detected by the position detecting unit 140 and is transmitted to a control circuit (not indicated in the drawing) in the vehicle as an electric signal.

### (Conclusion)

According to this embodiment, the actuator 160 is at least partially stored in the storage part 152-4 of the rotating body 150. Therefore, the distance from the rotating body 150 to the cam part 132-4 can be shortened when compared with a case in which the actuator 160 is at a position distant from the rotating body 150, so a manipulation feeling can be given to the manipulator while achieving a smaller size than before.

According to this embodiment, the actuator 160 and second elastic member 172 are at least partially stored in the storage part 152-4 of the rotating body 150. Therefore, the distance from the rotating body 150 to the cam part 132-4 can be shortened when compared with a case in which at least one of the actuator 160 and second elastic member 172 is at a position distant from the rotating body 150, so a manipulation feeling can be given to the manipulator while achieving a smaller size than before.

According to this embodiment, the cam part 132-4 and support body 130 are formed integrally with each other. Therefore, a smaller size can be achieved and the number of parts can be reduced when compared with a case in which separate members are combined.

According to this embodiment, the storage part 152-4 includes the inner wall 152-5 that slidably supports the actuator 160 and the actuator 160 travels along the inner wall 152-5. Therefore, a smaller size can be achieved when compared with a case in which a part used to guide the actuator 160 is provided separately.

According to this embodiment, at least part of the support axis 180 extending from the inside of the storage part 152-4 to the outside of the rotating body 150 is slidably positioned in the through-hole 163 in the actuator 160, and the actuator 160 travels along the support axis 180. Therefore, the rattle of the actuator 160 can be prevented and a manipulation feeling can be enhanced.

According to this embodiment, the position detecting unit 140 is further provided that detects a shift position according to the position of the support axis 180. Therefore, a smaller size can be achieved when compared with a case in which a separate part used to detect a shift position is provided.

The present invention is not limited to the embodiment described above. That is, a person having ordinary skill in the art may make various modifications, combinations, subcombinations, and replacements for the constituent elements in the above embodiment, without departing from the technical range of the present invention or an equivalent range of the technical range, as defined in the claims.

### Industrial Applicability

The present invention can be applied to multi-directional input devices such as, for example, vehicles, aircraft, ships, and space ships.

### Reference Sings List

- 100: multi-directional input device
- 120: manipulation lever
- 130: support body
- 131: first support body
- 131-3: first sliding support surface
- 132: second support body
- 132-3: second sliding support surface
- 132-4: cam part
- 140: position detecting unit
- 150: rotating body
- 151-3: first sliding surface
- 152-3: second sliding surface
- 152-4: storage part
- 152-5: inner wall
- 160: actuator
- 163: through-hole
- 172: second elastic member
- 180: support axis

## Claims

1. A multi-directional input device (100) comprising:
a rotating body (150) that includes a sliding surface (151-3, 152-3) forming at least part of a virtual spherical surface and also includes a storage part (152-4) recessed from an outside of the virtual spherical surface toward an inside;
a support body (130) that rotatably supports the rotating body (150) by slidably supporting the sliding surface (151-3, 152-3);
an actuator (160) that is at least partially stored in the storage part (152-4);
a cam part (132-4) that abuts the actuator (160);
an elastic member (172) that urges the actuator (160) between the rotating body (150) and the actuator (160) toward the cam part (132-4); and
a manipulation lever (120) that rotates together with the rotating body (150) and is capable of being manipulated to shift to a plurality of shift positions;
**characterized in that**
the multi-directional input device further comprises a support axis (180) extending from an inside of the storage part (152-4) to an outside of the rotating body (150);
the actuator (160) has a through-hole (163);
at least part of the support axis (180) is slidably positioned in the through-hole (163);
and
the actuator (160) is configured to travel along the support axis (180).

2. The multi-directional input device (100) according to Claim 1, wherein the elastic member (172) is at least partially stored in the storage part (152-4).

3. The multi-directional input device (100) according to Claim 1 or Claim 2, wherein the cam part (132-4) and the support body (130) are formed integrally with each other.

4. The multi-directional input device (100) according to any one of Claim 1 to Claim 3, wherein:
the storage part (152-4) includes an inner wall (152-5) that slidably supports the actuator (160); and
the actuator (160) travels along the inner wall (152-5).

5. The multi-directional input device (100) according to any one of Claim 1 to Claim 4, further comprising a position detecting unit (140) that detects the shift position according to a position of the support axis (180).

## Patentansprüche

1. Multidirektionale Eingabevorrichtung (100), aufweisend:
einen rotierenden Körper (150), der eine Gleitfläche (151-3, 152-3) aufweist, die mindestens einen Teil einer virtuellen Kugelfläche bildet, und der auch ein Aufnahmeteil (152-4) aufweist, das von einer Außenseite der virtuellen Kugelfläche in Richtung nach innen vertieft ist;
einen Stützkörper (130), der den rotierenden Körper (150) drehbar abstützt, indem er die Gleitfläche (151-3, 152-3) verschiebbar abstützt;
einen Aktuator (160), der zumindest teilweise in dem Aufnahmeteil (152-4) aufgenommen ist;
ein Steuerflächenteil (132-4), das an dem Aktuator (160) anliegt;
ein elastisches Element (172), das den Aktuator (160) zwischen dem rotierenden Körper (150) und dem Aktuator (160) in Richtung auf das Steuerflächenteil (132-4) drückt; und
einen Betätigungshebel (120), der sich zusammen mit dem rotierenden Körper (150) dreht und betätigt werden kann, um in eine Mehrzahl von Schaltpositionen zu schalten;
**dadurch gekennzeichnet, dass**
die multidirektionale Eingabevorrichtung ferner eine Abstützachse (180) aufweist, die sich von einer Innenseite des Aufnahmeteils (152-4) zu einer Außenseite des rotierenden Körpers (150) erstreckt;
der Aktuator (160) eine Durchgangsöffnung (163) aufweist;
zumindest ein Teil der Abstützachse (180) in der Durchgangsöffnung (163) verschiebbar angeordnet ist; und
der Aktuator (160) dazu ausgebildet ist, sich entlang der Abstützachse (180) zu bewegen.

2. Multidirektionale Eingabevorrichtung (100) nach Anspruch 1,
wobei das elastische Element (172) zumindest teilweise in dem Aufnahmeteil (152-4) aufgenommen ist.

3. Multidirektionale Eingabevorrichtung (100) nach Anspruch 1 oder Anspruch 2,
wobei das Steuerflächenteil (132-4) und der Stützkörper (130) einstückig miteinander ausgebildet sind.

4. Multidirektionale Eingabevorrichtung (100) nach einem der Ansprüche 1 bis 3,
wobei:
das Aufnahmeteil (152-4) eine Innenwand (152-5) aufweist, die den Aktuator (160) verschiebbar abstützt; und
der Aktuator (160) sich entlang der Innenwand (152-5) bewegt.

5. Multidirektionale Eingabevorrichtung (100) nach einem der Ansprüche 1 bis 4,
die ferner eine Positionserfassungseinheit (140) aufweist, die die Schaltposition in Abhängigkeit von einer Position der Abstützachse (180) erfasst.

## Revendications

1. Dispositif d'entrée multidirectionnel (100) comprenant :
un corps rotatif (150) qui comporte une surface de glissement (151-3, 152-3) formant au moins une partie d'une surface sphérique virtuelle et qui comporte également une partie rangement (152-4) renfoncée d'un extérieur de la surface sphérique virtuelle vers l'intérieur ;
un corps de support (130) qui supporte de manière rotative le corps rotatif (150) en supportant de manière coulissante la surface de glissement (151-3, 152-3) ;
un actionneur (160) qui est au moins partiellement rangé dans la partie rangement (152-4) ;
une partie came (132-4) qui jouxte l'actionneur (160) ;
un élément élastique (172) qui pousse l'actionneur (160) entre le corps rotatif (150) et l'actionneur (160) vers la partie came (132-4) ; et
un levier de manipulation (120) qui tourne avec le corps rotatif (150) et qui peut être manipulé de manière à basculer en une pluralité de positions ;
**caractérisé en ce que**
le dispositif d'entrée multidirectionnel comprend en outre un axe de support (180) s'étendant d'un intérieur de la partie rangement (152-4) vers un extérieur du corps rotatif (150) ;
l'actionneur (160) présente un trou traversant (163) ;
au moins une partie de l'axe de support (180) est positionnée de manière coulissante dans le trou traversant (163) ;
et
l'actionneur (160) est configuré de manière à se déplacer le long de l'axe de support (180).

2. Le dispositif d'entrée multidirectionnel (100) selon la revendication 1, dans lequel l'élément élastique (172) est rangé au moins partiellement dans la partie rangement (152-4).

3. Le dispositif d'entrée multidirectionnel (100) selon la revendication 1 ou 2, dans lequel la partie came (132-4) et le corps de support (130) sont entièrement solidaires l'un de l'autre.

4. Le dispositif d'entrée multidirectionnel (100) selon l'une quelconque des revendications 1 à 3, dans lequel :
la partie rangement (152-4) comprend une paroi interne (152-5) qui supporte l'actionneur (160) de manière coulissante ; et
l'actionneur (160) se déplace le long de la paroi interne (152-5).

5. Le dispositif d'entrée multidirectionnel (100) selon l'une quelconque des revendications 1 à 4, comprenant en outre une unité de détection de position (140) qui détecte la position de basculement en fonction d'une position de l'axe de support (180).
